Europäisches Patentamt

European Patent Office

Office européen des brevets

(19)

(11) Veröffentlichungsnummer: **0 200 954 B1**

## (12) EUROPÄISCHE PATENTSCHRIFT

(45) Veröffentlichungstag der Patentschrift: 10.07.91

(51) Int. Cl.⁵: **C04B 35/48**

(21) Anmeldenummer: 86105034.2

(22) Anmeldetag: 12.04.86

Die Akte enthält technische Angaben, die nach dem Eingang der Anmeldung eingereicht wurden und die nicht in dieser Patentschrift enthalten sind.

(54) **Sinterformkörper, Verfahren zu seiner Herstellung und seine Verwendung.**

(30) Priorität: 13.04.85 DE 3513341

(43) Veröffentlichungstag der Anmeldung:
12.11.86 Patentblatt 86/46

(45) Bekanntmachung des Hinweises auf die
Patenterteilung:
10.07.91 Patentblatt 91/28

(84) Benannte Vertragsstaaten:
AT BE CH DE FR GB IT LI NL SE

(56) Entgegenhaltungen:
EP-A- 172 738
DE-A- 3 301 913

DERWENT ACCESSION Nr. 85-47 076, Questel Telesystemes (WPIL) DERWENT PUBLI-
CATIONS LTD. London & JP-A-60-5
067(TOYO SODA MFG. KK.)

DERWENT ACCESSION Nr. 85-64384, Questel
Telesystemes (WPIL) DERWENT PUBLICA-
TIONS LTD. London & JP-A-60-18 667
(TORAY IND. INC.)

DERWENT ACCESSION Nr. 82-84 859, Questel Telesystemes (WPIL) DERWENT PUBLI-
CATIONS LTD. London & JP-A-57-140376
(NGK SPARK PLUG KK.)

(73) Patentinhaber: **Feldmühle Aktiengesellschaft
Fritz-Vomfelde-Platz 4
W-4000 Düsseldorf 11(DE)**

(72) Erfinder: **Dworak, Ulf, Dr. Dipl.-Min.
Am Brühl 12
8961 Buchenberg(DE)**
Erfinder: **Olapinski, Hans, Dr. Dipl.-Chem.
Talstrasse 12
W-7307 Aichwald 1(DE)**
Erfinder: **Burger, Wolfgang, Dr. Dipl.-Chem.
Mühlhaldenweg 75
W-7310 Plochingen(DE)**

Rank Xerox (UK) Business Services

**Beschreibung**

Die vorliegende Erfindung betrifft einen Sinterformkörper, der aus teilstabilsiertem Zirkoniumoxid als alleiniger Komponente besteht oder der teilstabilisiertes Zirkoniumoxid in Abmischung mit Spinell enthält. Desweiteren betrifft die Erfindung ein Verfahren zur Herstellung des Sinterformkörpers und seine Verwendung. Ein Sinterformkörper aus teilstabilisiertem Zirkoniumoxid ist aus der auf die Anmelderin zurückgehenden DE-A-23 07 666 bekannt. Neben dem zur Erzielung der optimalen Eigenschaften genannten Magnesiumoxid werden dort neben den Oxiden des Cers, Lanthans, Ytterbiums, Titans auch bereits Yttriumoxid, sowie Mischungen dieser Oxide genannt, ohne jedoch eine bestimmte vorteilhafte Wirkung dieser weiteren Oxide in Aussicht zu stellen. Dieser Vorschlag stellt zur Erreichung einer verbesserten Hochtemperaturbelastbarkeit auf möglichst hohe kubische Phasenanteile im Bereich von 75 bis 95 % ab, wobei die Art der übrigen Phasenanteile nicht angegeben ist. Als maximale Festigkeit wird eine Biegebruchfestigkeit von 63 kp/mm$^2$ entsprechend ca. 618 MPa angegeben, jedoch hat sich zwischenzeitlich erwiesen, daß diese an sich gute Festigkeit bei längerer thermischer Belastung stark zurückgeht, so daß diese Keramik in vielen Fällen nicht eingesetzt werden kann. Ein weiterer Nachteil liegt in dem komplizierten Herstellungsverfahren, bei dem von einer Mischung aus vorstabilisiertem zirkoniumoxid, unstabilisiertem Zirkoniumoxid und stabilisierenden Metalloxiden ausgegangen wird.

Eine Untersuchung über den Einsatz verschiedener Metalloxide bei der Stabilisierung von Zirkoniumoxid wird in dem Aufsatz "Stabilization Of Zirconia With Combined Additives, A Study Of The Solid Solution Stability" (veröffentlicht in Refractories (1970) S. 723 - 726) beschrieben. Eine Abmischung aus 92 Mol.% Zirkoniumoxid, 5 Mol.% Magnesiumoxid und 3 Mol.% Yttriumoxid hat gemäß dieser Untersuchung eine ausschließlich kubische Modifikation, liegt mit einer Festigkeit von 2000 kg/cm$^2$ entsprechend 196 MPa aber noch wesentlich unter der Festigkeit des in der DE-A-23 07 666 beschriebenen zirkoniumoxids.

In der EP-A-13 599 wird ein teilstabilisiertes Zirkoniumoxid beschrieben, bei dem ausschließlich Magnesiumoxid in einer Menge von 2,8 bis 4 Gew.% als stabilisierendes Metalloxid vorgesehen ist. Die Phasenzusammensetzung dieses Zirkoniumoxids wird mit 2 bis 10 Gew.% tetragonal und 0,5 bis 20 Gew.% monoklin angegeben. Tetragonale und monokline Phasenanteile liegen dabei als Ausscheidung in im übrigen aus der kubischen Modifikation bestehenden Körnern vor. Wie sich anhand von Untersuchungen gezeigt hat, weisen Bauteile aus diesem teilstabilisierten Zirkoniumoxid ebenfalls eine für viele Einsatzgebiete noch nicht ausreichende thermische Belastbarkeit auf.

Es sind bereits verschiedene Vorschläge bekannt geworden, die Temperaturbeständigkeit der bekannten teilstabilisierten Zirkonoxide zu verbessern. Die EP-A-36 786 sieht zur Verbesserung der Temperaturbeständigkeit im Bereich von 200 bis 300 °C ein teilstabilisiertes Zirkoniumoxid mit 2 bis 7 Mol.% Yttriumoxid als stabilisierendes Oxid vor. Bis zu 30 Mol.% des Yttriumoxids können durch Oxide des Ytterbiums, Scandiums, Niobs, Samariums oder durch Calcium-oder Magnesiumoxid ersetzt sein. Als weitere keramische Werkstoffe können noch bis zu 30 Gew.% Aluminiumoxid, Siliziumoxid und Aluminiumsilikat zugegeben werden. Die Kristallphasenzusammensetzung wird mit kubisch/tetragonal, kubisch/tetragonal und bis zu 20 Vol.% monoklin, tetragonal, tetragonal und bis zu 20 Vol.% monoklin oder kubisch angegeben, läßt also hinsichtlich der kubisch/ tetragonalen Anteile keinen genauen Schluß zu. Um das Zirkoniumoxid in der tetragonalen Modifikation zu erhalten, ist gemäß der EP-A-36 786 vorgesehen, daß das Zirkoniumoxid im Sinterformkörper in einer 2 µm nicht überschreitenden Korngröße vorliegt, vorzugsweise soll die Korngröße sogar < 1 µm sein. Um zu einer derartig feinen Korngröße zu gelangen, sieht die EP-A-36 786 die Verwendung von Zirkonium- bzw. Yttriumoxidausgangsverbindungen vor, also z.B. der entsprechenden Chloride, Nitrate oder Oxalate, die zunächst gemischt, dann thermisch zersetzt und anschließend naß gemahlen werden, um zu einem extrem feinen Ausgangspulver zu gelangen, mit dem die Herstellung eines Sinterformkörpers hoher Dichte und ausreichender Festigkeit mit einer Korngröße < 2 µm unter Anwendung einer Sintertemperatur unterhalb 1500 °C möglich ist. Der wesentliche Unterschied des in der EP-A- 36 786 beschriebenen Werkstoffes liegt im Vergleich zu den vordiskutierten teilstabilisierten Zirkoniumoxiden in der Gefügestruktur. Durch die extrem geringe Korngröße in Verbindung mit der relativ niedrigen Sintertemperatur wird gemäß der EP-A-36 786 eine Struktur erzielt, bei der die einzelnen Körner des Gefüges in Abhängigkeit von ihrer Größe und ihrem Gehalt an stabilisierenden Oxiden selbst in der kubischen bzw. tetragonalen oder auch monoklinen Modifikation vorliegen.

Dieses komplizierte Herstellungsverfahren führt zu einem extrem teuren Ausgangsmaterial und hat bisher einem breit gestreuten Einsatz von aus diesem Werkstoff bestehenden Sinterformkörpern entgegengestanden. Zudem hat sich gezeigt, daß die thermische Belastbarkeit vielfach noch nicht befriedigt. Ein weiterer Nachteil dieses extrem feinkörnigen Zirkoniumoxidwerkstoffes besteht in seiner hohen Kriechgeschwindigkeit bei hohen Temperaturen. Sie liegt um ca. 1-2 Zehnerpotenzen höher als bei grobkörnigen teilstabilisierten Zirkoniumoxidwerkstoffen.

Gemäß einem weiteren aus der DE-A- 33 45 659 bekannt gewordenen Vorschlag zur Verbesserung der bekannten Sinterformkörper aus teilstabilisiertem Zirkoniumoxid ist es vorgesehen, einen Sinterformkörper mit einer höher stabilisierten tetragonalen oder einer überwiegend in der kubischen Phase vorliegenden dünnen Schicht zu überziehen. Als Basiskörper können dabei sowohl die sogenannten TZP-Zirkoniumoxid-Sinterformkörper, wie sie in der EP-A- 36 786 beschrieben sind, aber auch die üblichen mit Magnesiumoxid stabilisierten Zirkoniumoxidkeramiken, wie sie die EP-A- 13 599 beschreibt, eingesetzt werden. Die in Aussicht gestellte Verbesserung betrifft jedoch nur einen relativ niedrigen Temperaturbereich bis zu 400 °C, bei dem mittels der vorgeschlagenen Umhüllung der unter Einfluß von Feuchtigkeit eintretende Zersetzungsprozeß der sogenannten TZP-Keramiken eingeschränkt werden soll. Nachteilig bei diesem Vorschlag ist die geringe Dicke von 0,1 bis 200 μm, vorzugsweise von 0,3 bis 30 μm, der äußeren Schutzschicht. Wird nämlich bei auf Verschleiß beanspruchten Teilen diese Schicht abgetragen, sind die bekannten Nachteile zu erwarten. Ein weiterer Nachteil liegt in der Schwierigkeit maßhaltige Teile herzustellen, denn überwiegend schließt sich im Anschluß an den Sinterprozeß eine mechanische Bearbeitung der Sinterformkörper, z.B. durch Schleifen der Oberfläche an. Eine aufgetragene Schutzschicht würde dabei sogar bei einer Dicke von 200 μm in den meisten Fällen abgetragen werden. Wird das beschriebene Umhüllungsverfahren für eine konventionelle MgO-teilstabilisierte ZrO₂-Keramik (Mg-PSZ) angewendet, ist davon auszugehen daß sich zwar an der Oberfläche - im Bereich der Schutzschicht -auch nach einer länger dauernden Temperaturbelastung - meßtechnisch nur sehr geringe monokline Phasenanteile ermitteln lassen, wohingegen sich im Inneren des Sinterformkörpers, nämlich da, wo die äußere Schutzschicht ohne Einfluß ist, die auch von den bekannten MgO-teilstabilisierten ZrO₂-Keramiken beschriebene Zersetzung bzw. Umwandlung in die monokline Phase vollzieht, da hier eine Auswanderung von Magnesiumoxid in den Korngrenzenbereich stattfindet.

Aus der eigenen DE-A- 33 01 913, die einen Kolbenring für eine Verbrennungskraftmaschine betrifft, ist ein mit einem oder mehreren der Oxide von Magnesium, Calcium und Yttrium teilstabilisiertes Zirkoniumoxid bekannt, bei dem der kubische Modifikationsanteil bis 80 Gew.% und der monokline Anteil bis 6 Gew.% betragen kann. Der tetragonale Modifikationsanteil soll zwischen 20 und 60 Gew.% liegen. Die angegebene Festigkeit liegt bei mindestens 400 MPa und ist, da ein Temperaturbereich bzw. eine Temperatureinwirkungszeit nicht genannt ist, als Bruchfestigkeit bei Raumtemperatur zu werten. Ein mit 2,7 bis 3,2 Gew.% dotiertes Zirkonoxid soll ein Maximum an Festigkeit und Verschleißfestigkeit aufweisen. Es hat sich zwischenzeitlich jedoch gezeigt, daß der bekannte Werkstoff, insbesondere bei höherer und länger dauernder Temperaturbelastung, über eine noch nicht ausreichende thermodynamische Stabilität verfügt.

Aus dem Derwent-Auszug Nr. 85-47076 ist wiederum ein sogenanntes TZP-Zirkoniumoxid bekannt, wie es bereits in der eingangs erwähnten EP-A- 36 786 beschrieben wird. Die Korngröße liegt unterhalb von 2 μm. Die Angaben hinsichtlich der einzelnen Modifikationsanteile sind vage, besagen aber, daß entweder die tetragonale Phase oder eine gemischt kristalline Phase aus kubisch/tetragonal als Hauptphase vorliegen können. Aber auch bis zu 40 Mol.% monokliner Phase und lediglich 10 Mol.% tetragonaler Phase sind möglich. Als Stabilisatoren werden Y₂O₃, MgO, CaO oder CeO₂ vorgeschlagen, wobei die Anteile der einzelnen stabilisierenden Oxide nicht näher angegeben sind.

Nachteilig ist auch hier wieder die noch nicht ausreichende Temperaturbelastbarkeit, die zwischenzeitlich auch aus der einschlägigen Fachliteratur bekanntgeworden ist. Vermutlich sind hierfür die hohen Anteile an monokliner Phase die Ursache.

Aus dem Derwent-Auszug 85-064384 ist ein Zirkoniumoxid zur Herstellung von Gleitringdichtungen bekannt. Als stabilisierende Oxide werden vorgeschlagen: Calciumoxid, Yttriumoxid, Ytterbiumoxid, Magnesiumoxid, Lanthanoxid, Strontiumoxid, Abmischungen von Calciumoxid und Magnesiumoxid und Abmischungen von Magnesiumoxid und Yttriumoxid Es finden sich jedoch keine Angaben, in welchem Verhältnis die einzelnen Oxide miteinander abgemischt sein sollen.

Der bekannte Werkstoff soll 5 bis 70 Mol.-% kubisches und tetragonales Zirkonoxid aufweisen, so daß auf das Vorliegen von mindestens 30 Mol.-% monoklinen Zirkonoxids zu schließen ist. Die thermische Stabilität wird auf Mikrorisse im monoklinen Zirkonoxid zurückgeführt.

Schließlich ist aus dem Derwent-Auszug 82-84859 E ein teilstabilisiertes Zirkoniumoxid bekannt, bei dem ausschließlich Y₂O₃ als stabilisierendes Oxid genannt ist. Vorzugsweise werden zusätzlich noch Aluminium- und Siliziumoxid als Sinterhilfsmittel zugegeben. Aus der Angabe, daß diese Verbindungen als Sinterhilfsmittel zugegeben werden ist darauf zu schließen, daß die zugesetzten Mengen nicht mehr als 4 Gew.-% ausmachen.

Aus der Verwendung eines sehr feinen Yttriumoxidausgangspulvers ist darauf zu schliefen, daß auch dieser bekannte Werkstoff den TZP-Qualitäten mit ihrer für viele Anwendungsbereiche noch nicht ausreichenden Temperaturbeständigkeit zuzuordnen ist.

Aus der nicht vorveröffentlichten EP-A- 172 738, die für die Vertragsstaaten: AT, BE, CH, DE, FR, GB,

EP 0 200 954 B1

LI, NL und SE gilt, ist der Vorschlag bekannt, ein teilstabilisiertes Zirkoniumdioxid mit einer Mischung von Oxiden zu stabilisieren, die aus 0,5 bis 10 Gew.% Yttriumoxid und mindestens einem der Oxide des Magnesiums, Calciums, Kupfers, Zinks und Cers in einer Menge von 1 bis 10 Gew.% besteht. Die Phasenanteile des dort beschriebenen Sinter-formkörers sollen bei 50 bis 70 Vol.% der kubischen, mehr als 20 und bis zu 50 Vol.% der tetragonalen und weniger als 10 Vol.% der monoklinen Modifikation bestehen, wobei die monoklinen Bestandteile im Korngrenzenbereich liegen und Abmessungen zwischen 1 und 10 $\mu$m aufweisen sollen. Das Herstellungsverfahren für die Sinterformkörper nach der EP-A- 172 738 sieht im Anschluß an den Sinterprozeß eine relativ langsame Abkühlung, insbesondere im Temperaturbereich unterhalb 1000 °C vor.

Ausgehend von diesem Stand der Technik, besteht die Aufgabe der vorliegenden Erfindung darin, einen weiter verbesserten Sinterformkörper aus teilstabilisiertem Zirkoniumoxid oder einen solchen Sinterformkörper zu entwickeln, der außer dem als Hauptkomponente vorliegenden teilstabilisiertem Zirkoniumoxid einen weiteren keramischen Werkstoff enthält, wobei der Körper eine befriedigende Festigkeit aufweisen soll, eine hohe Temperaturbelastbarkeit - vor allem auch bei längerer Temperaturbelastung im Bereich von 1000 °C - ohne nennenswerten Festigkeitsverlust aufweist und kostengünstig herstellbar ist.

Zur Lösung dieser Aufgabe sieht die Erfindung einen aus teilstabilisiertem Zirkoniumoxid bestehenden Sinterformkörper vor, bei dem das Zirkoniumoxid mit einer Mischung von Oxiden stabilisiert ist, die rechnerisch einer äquivalenten Zusatzmenge von 2,9 bis 3,6 Gew.% Magnesiumoxid - bezogen auf die Gesamtzusammensetzung des teilstabilisierten Zirkoniumoxids - entspricht, wobei die Mischung der stabilisierenden Oxide neben Magnesiumoxid - und/oder einer grammäquivalenten Menge Calciumoxid noch aus Yttriumoxid besteht und die rechnerisch auf Magnesiumoxid bezogene Zusatzmenge an stabilisierenden Oxiden zu 20 bis 50 % durch eine grammäquivalente Menge Yttriumoxid substituiert ist, wobei die stabilisierenden Oxide homogen in dem Zirkoniumoxid verteilt sind und das Zirkoniumoxid aus in der kubischen Phase vorliegenden Zirkoniumoxidkörnern mit einer mittleren Größe von 5 bis 100 $\mu$m besteht, in denen tetragonale und monokline Phasenanteile in Form von Ausscheidungen vorliegen, wobei ferner die Phasenanteile des teilstabilisierten Zirkoniumoxids sich wie folgt zusammensetzen:

40 vol % bis weniger als 50 Vol.% kubische Modifikation, mehr als 45 Vol.% bis 60 Vol.% tetragonale Modifikation weniger als 5 Vol.% monokline Modifikation, wobei sich die Anteile der verschiedenen Modifikationen auf 100 Vol.% ergänzen, gemessen bei Raumtemperatur an der spiegelglanzpolierten Oberfläche des Sinterformkörpers.

Gemäß einer weiteren Ausführungsform kann der vorstehend beschriebene Sinterformkörper dahingehend abgewandelt sein, daß die rechnerisch auf Magnesiumoxid bezogene Zusatzmenge an stabilisierende Oxiden zu 40 bis 70 % durch eine grammäquivalente yttriumoxid Menge substituiert ist und der Anteil der monoklinen Modifikation bei < 1 Vol.% liegt, wobei der, Sinterformkörper nach einer Temperaturbelastung von 150 h und 1400 °C einen monoklinen Phasenanteil < 10 vol % und eine Biegebruchfestigkeit > 400 MPa aufweist.

Die vorliegende Erfindung stellt damit Sinterformkörper zur Verfügung, die sowohl gegenüber den feinkörnigen sogenannten TZP-ZrO$_2$-Keramiken gemäß EP-A- 36 786 als auch gegenüber den an sich grobkörnigeren, zumeist auf Basis MgO-teilstabilisierten ZrO$_2$-Keramiken eine höhere Temperaturbelastbarkeit aufweisen.

Insbesondere nach einer Belastung im Temperaturbereich von ca. 1000 °C und mehr, weist der erfindungsgemäße Sinterformkörper eine ausgezeichnete Festigkeit - gemessen bei Raumtemperatur - auf, die von den bisher bekannten Sinterformkörpern nicht erreicht wurde. Die bekannten Sinterformkörper waren bei relativ niedrigen Temperaturen zwar für längere Zeit belastbar, der maximal erreichbare Temperaturbereich ging jedoch nicht über 900 °C hinaus und war vielfach bedeutend niedriger anzusetzen. Bei der Beurteilung der Temperaturbelastbarkeit ist dabei zu berücksichtigen, daß sich vorrangig die Höhe der einwirkenden Temperatur und in wesentlich geringerem Umfang die Belastungsdauer auf die Festigkeit auswirken.

Neben der verbesserten Temperarturbelastbarkeit besteht gegenüber den TZP-Keramiken der Vorteil, daß auf die umständlichen und kostentreibenden Praktiken der Kopräzipitation und thermischen Zersetzung bei der Herstellung der Ausgangspulver aus Zirkoniumoxid und stabilisierenden Oxide verzichtet werden kann.

Bei der Herstellung der an sich grobkörnigen ZrO$_2$-Keramiken, zu denen auch die Sinterformkörper der vorliegenden Erfindung zählen, wurden die Oxide des Magnesiums, Calciums und Yttriums zwar auch generell bereits vorgeschlagen, jedoch ohne ein bestimmtes Abmischungsverhältnis und vorwiegend mit dem Ziel, einen möglichst hohen kubischen Phasenanteil zu erzielen. Die vorliegende Erfindung ermöglicht durch das ganz spezielle Abmischungsverhältnis der Oxide des Magnesiums bzw. Calciums, von denen das Magnesiumoxid wegen der damit erzielbaren höheren Festigkeit besonders bevorzugt ist, in Abmischung

4

mit Yttriumoxid die Herstellung eines Sinterformkörpers, der infolge seiner Phasenzusammensetzung auch bei höherer Temperaturbelastung eine befriedigende Festigkeit aufweist, die im Einzelfall bei längerer Temperaturbelastung sogar noch geringfügig zunimmt. Zur Herstellung des Sinterformkörpers kann dabei auf die handelsüblichen Pulver der verschiedenen Oxide, nachdem sie einem an sich bekannten Mahlprozeß unterworfen werden, zurückgegriffen werden. Obwohl während des Sinterprozesses dabei ein erhebliches Kornwachstum beobachtet wird, weist der Sinterformkörper die beschriebene hohe Festigkeit und Temperaturbelastbarkeit auf.

Der in den Ansprüchen verwendete Ausdruck "spiegelglanzpoliert" bedeutet, daß der Sinterformkörper nach dem Sintern einer Politur unterzogen wurde, bei der eine spiegelglatte Oberfläche entsteht. Die Messung der Kristallphasen erfolgt an der polierten Oberfläche nach der Röntgenbeugungsmethode. Die Angaben der Kristallphasenzusammensetzung betreffen den gesinterten aber noch nicht einer Temperaturbelastung ausgesetzten Körper.

Homogene Verteilung bedeutet im Rahmen der vorliegenden Erfindung, daß die stabilisierenden Oxide gleichmäßig über den Querschnitt des Sinterformkörpers verteilt sind.

Zur Erzielung besonders hoher Festigkeiten kann es von Vorteil sein, daß der Sinterformkörper außer dem teilstabilisierten Zirkoniumoxid noch Spinell ($MgAl_2O_4$) in einer Menge von vorzugsweise 5 bis 20 Gew.% enthält.

In einer bevorzugten Ausführungsform weist der Sinterformkörper eine mittlere Korngröße des Zirkoniumoxids von 5 bis 70 $\mu$m auf.

Gemäß einer weiteren bevorzugten Ausführungsform erfolgt die Stabilisierung des Zirkoniumoxids mit einer Mischung von stabilisierenden Oxiden, die rechnerisch einer äquivalenten Menge von 2,6 bis 4,0, ganz besonders bevorzugt von 2,9 bis 3,6 Gew.% Magnesiumoxid entspricht, wobei die Mischung neben Magnesiumoxid und/oder einer grammäquivalenten Menge Calciumoxid noch aus Yttriumoxid besteht und die rechnerisch auf Magnesiumoxid bezogene Zusatzmenge an teilstabilisierenden Oxiden - wiederum zu 10 bis 70 % durch grammäquivalente Mengen von Yttriumoxid ausgetauscht ist. Gemäß einer weiteren bevorzugten Ausführungsform liegt der Substitutionsgrad des Magnesiumoxids dabei bei 20 bis 50 %.

Es wird auch bevorzugt, daß der Sinterformkörper einen Anteil der monoklinen Modifikation von < 5 Vol.% bezogen auf Gesamtkristallphase des teilstabilisierten Zirkoniumoxids aufweist. Ein solcher Sinterformkörper weist eine besonders hohe Festigkeit auch nach längerer thermischer Belastung auf. Noch weiter läßt sich die Festigkeit dadurch steigern, daß der Anteil der tetragonalen Modifikation gleichzeitig auf mehr als 45 Vol.% angehoben und der Anteil der kubischen Modifikation abgesenkt wird.

**(Hier neue Seite 11a einfügen)**

Unter handelsüblichem Zirkoniumoxidpulver bzw. unter einem teilstabilisierten Zirkoniumoxid, wie es in der vorliegenden Erfindung beschrieben ist, werden auch solche Zusammensetzungen verstanden, die einen gewissen Anteil von Hafniumoxid aufweisen, wie er in an sich unvermeidbarer Form in den meisten handelsüblichen Zirkoniumoxidpulvern enthalten ist. Dieser Anteil sollte jedoch vorzugsweise < 2 Gew.% bezogen auf Zirkoniumoxid sein. Von wesentlicher Bedeutung ist es auch, daß die verwendeten Rohstoffe

**S. 11a einzuschieben als mittlerer Absatz auf S.11**

Eine wesentlich geringere Korngröße vorzugsweise im Bereich von 5 bis 20 $\mu$m ist dann erreichbar, wenn der Sinterformkörper außer teilstabilisiertem Zirkoniumoxid Spinell vorzugsweise in einer Menge von 5 bis 20 Gew.% enthält, das mit den Komponenten des teilstabilisierten Zirkoniumoxids keine Reaktion eingeht. Die Forderung der Nichtreaktivität ist zwingend, da eine Beeinflussung der Phasenzusammensetzung des teilstabilisierten Zirkoniumoxids unter allen Umständen vermieden werden muß. Stoffe wie Aluminiumsilikat und Siliziumoxid sind daher als Zusatzstoffe nicht geeignet. Bei einem Spinell enthaltenden Sinterformkörper ist das Zirkoniumoxid mit einer Mischung von Oxiden stabilisiert, die rechnerisch einer äquivalenten Zusatzmenge von 2,5 bis 4,5 Gew.% Magnesiumoxid - bezogen auf die Gesamtzusammensetzung des teilstabilisierten Zirkoniumoxids - entspricht, wobei die Mischung der stabilisierenden Oxide neben Magnesiumoxid und/oder einer grammäquivalenten Menge Calciumoxid noch aus Yttriumoxid besteht und die rechnerisch auf Magnesiumoxid bezogene Zusatzmenge aus stabilisierenden Oxiden zu 10 bis 70 % durch eine grammäquivalente Menge Yttriumoxid substituiert ist, wobei die stabilisierenden Oxide homogen in dem Zirkononiumoxid verteilt sind und das Zirkoniumoxid aus in der kubischen Phase vorliegenden Zirkoniumoxidkörnern besteht, in denen tetragonale und monokline Phasenanteile in Form von Ausscheidungen vorliegen, wobei die Phasenanteile des teilstabilisierten Zirkoniumoxids sich wie folgt zusammensetzen:

40 bis 70 Vol.% kubische Modifikation

30 bis 60 Vol.% tetragonale Modifikation

und bis zu 10 Vol. % monokline Modifikation,

wobei sich die Anteile der verschiedenen Modifikationen auf 100 Vol.% ergänzen, gemessen bei Raumtemperatur an der spiegelglanzpolierten Oberfläche des Sinterformkörpers. möglichst geringe Mengen an weiteren Verunreinigungen enthalten, so daß der Sinterformkörper nicht mehr als 1,2, bevorzugt nicht mehr als 0,8 Gew.%, an sonstigen Verunreinigungen, vorzugsweise jedoch noch einen wesentlich geringeren Prozentsatz solcher Verunreinigungen aufweist. Zu solchen vielfach unvermeidbaren Verunreinigungen sind zu zählen: $Fe_2O_3$ und $SiO_2$.

Als besonders geeignet, insbesondere zur Herstellung von Bauteilen für Verbrennungsmotoren, hat sich ein Sinterformkörper gemäß der vorliegenden Erfindung erwiesen, der auch nach einer Temperaturbelastung von 1000 h bei 1000 °C über eine Biegebruchfestigkeit von mehr als 400 MPa verfügt.

Eine besonders geeignete Zusammensetzung an stabilisierenden Oxiden aus Magnesiumoxid bzw. einer grammäquivalenten Calciumoxidmenge sowie Yttriumoxid, die einer rechnerisch auf Magnesiumoxid bezogenen Zusatzmenge von 2,9 bis 3,6 Gew.% entspricht, wobei die rechnerisch auf Magnesiumoxid bezogene Zusatzmenge an stabilisierenden Oxiden zu 40 - 60 % durch eine grammäquivalente Menge Yttriumoxid substituiert ist, gestattet die Herstellung eines Sinterformkörpers, dessen monokliner Phasenanteil bei Raumtemperatur < 1 vol % und nach einer Temperaturbelastung von 150 h und 1400 °C < 10 vol % ist. Die Biegebruchfestigkeit $\sigma_B$ dieses Sinterformkörpers beträgt nach 150 h und 1400 °C mehr als 400 MPa - gemessen bei Raumtemperatur -weist also praktisch keinen Festigkeitsverlust auf.

Eine ganz wesentliche Bedeutung kommt dem Herstellungverfahren des erfindungsgemäßen Sinterformkörpers zu. Dabei wird zunächst Zirkoniumoxid mit einer Mischung von stabilisierenden Oxiden, wie sie in den die Sinterformkörper betreffenden Patentansprüchen angegeben ist, vermischt. Alternativ kann der Mischung aus Zirkoniumoxid und stabilisierenden Oxiden noch Spinell vorzugsweise in einer Menge von 5 bis 20 Gew.% zugegeben werden. Die entstandene Mischung wird unter Zusatz eines Dispergierungsmittels naßgemahlen, vorzugsweise auf eine Teilchengröße $D_{50}$ von 0,7 bis 1,5 $\mu$m.

Nach Sprühtrocknung der gemahlenen Mischung wird aus der Pulvermischung ein Körper gepreßt und dieser auf eine zur Erzeugung der kubischen Phase ausreichende Temperatur von mindestens 1600 °c, vorzugsweise mit einem Aufheizgradienten von 80 bis 130 °C/h erhitzt. Nach einer Haltezeit von 0,5 bis 5 Stunden wird der Sinterformkörper zur Erzeugung tetragonaler Ausscheidungen in den in der kubischen Phase vorliegenden Matrixkörnern im kubischen/tetragonalen 2-Phasengebiet getempert. Die Temperung erfolgt, während der Sinterformkörper mit einer Abkühlrate von 250 °C/h bis 400 °C/h auf Raumtemperatur abgekühlt wird. Alternativ kann die Abkühlrate auch mehr als 1000 °C/h betragen und dabei auf unter 1000 °C abgekühlt werden, worauf der Sinterformkörper anschließend für eine Zeit von 0,5 bis 2 Stunden bei einer Temperatur im Bereich von 1350 bis 1450 °C getempert wird und anschließend auf Raumtemperatur abgekühlt wird. Eine weitere Verbesserung der Festigkeit kann erreicht werden, wenn der Sinterformkörper nach dem Sintern einer heißisostatischen Nachverdichtung unterzogen wird.

Das kubisch/tetragonale 2-Phasengebiet, in dem die kubische und tetragonale Phase nebeneinander vorliegen, kann aus den Phasendiagrammen der Systeme $ZrO_2/MgO$ bzw. CaO und $ZrO_2/Y_2O_3$ entnommen werden. Beispielsweise liegt bezogen auf 3 Gew.% MgO das 2-Phasengebiet zwischen ca. 1400 und 1800 °C.

Der erfindungsgemäße Sinterformkörper wird in vorteilhafter Weise überall dort angewendet, wo mit einer Temperaturbelastung im Bereich von über 900 °C zu rechnen ist. Er ist daher insbesondere für in diesem Temperaturbereich dauerbelastete Bauteile geeignet. Dazu gehören insbesondere: Sauerstoffmeßsonden, wie z.B. Lambdasonden, Bauteile für Verbrennungsmotoren, wie z.B. Kolbenmulde, Zylinderkopfplatte, Ventilführungen, ferner aber auch Umformwerkzeuge, wie z.B. Ziehdüsen. Bauteile, bei denen die Wärmedämmung im Vordergrund steht, werden vorzugsweise aus einem solchen Sinterwerkstoff hergestellt, der zu einem möglichst hohen Anteil, vorzugsweise zu 90 -100% aus einem teilstabilisierten Zirkoniumoxid entsprechend der vorliegenden Erfindung besteht.

Dagegen hat sich für Bauteile mit besonders hoher Bruchfestigkeit eine Zusammensetzung des Sinterformkörpers aus teilstabilisiertem Zirkoniumoxid und Spinell in einer Menge bis zu 20 Gew.% als besonders geeignet erwiesen.

Die nachfolgenden Beispiele 1 - 10, sowie die Vergleichsbeispiele 1 - 3 dienen der näheren Erklärung der Erfindung, ohne daß die Erfindung auf die beschriebenen Ausführungsformen beschränkt ist. In den Beispielen erfolgte die Pulveraufbereitung durch Naßmahlung der Pulvermischung auf einer Schwingmühle bis zu einer Teilchengröße $D_{50}$ von ca. 1 $\mu$m. Nach Zusatz einer Polyvinylalkohollösung als Bindemittel wurde sprühgetrocknet, aus dem erhaltenen sprühgetrockneten Pulver Formkörper gepreßt, und diese mit einer Aufheizrate von 100 °C/h, einer Haltezeit von 5 Stunden bei 1770° und einer Abkühlrate von 300

EP 0 200 954 B1

°C/h abgekühlt. Die angegebenen Bruchfestigkeitswerte wurden bei Raumtemperatur - nach beschriebener Temperaturbelastung - an Prüfstäbchen mit einem Querschnitt von 3,5 x 4 mm und einer Länge von 45 mm nach dem 4-Punkt-Verfahren gemessen.

Vergleichsbeispiel 1:

In diesem Beispiel wurde eine Pulvermischung der nachfolgenden Zusammensetzung verwendet:
1,76 Gew.% MgO
0,36 Gew.% $Y_2O_3$
97,88 Gew.% $ZrO_2$
Es wurde ein kubischer Phasenanteil von ca. 40 und ein monokliner Phasenanteil von ca. 60 % gemessen. Die Biegebruchfestigkeit $\sigma_B$ wurde mit 95 MPa bei Raumtemperatur ermittelt und ist damit sehr niedrig.

Vergleichbeispiel 2:

Eine Pulvermischung von 3,2 Gew.% MgO, entsprechend 9,18 Mol.% und 96,8 Gew.% $ZrO_2$ wurde eingesetzt und die Phasenanteile des teilstabilisierten Zirkonoxids wie folgt ermittelt:

| | |
|---|---|
| monokline Modifikation: | 6 % |
| tetragonale Modifikation: | 44 % |
| kubische Modifikation: | 50 % mittlere |
| Korngröße: | 60 µm |

Die Biegebruchfestigkeit $\sigma_B$ wurde mit 500 MPa ermittelt und liegt damit wesentlich besser als im Vergleichsbeispiel 1. Nach einer Temperaturbelastung von 1000 Stunden und 1000 °C wird aber bereits ein Nachlassen der Biegebruchfestigkeit auf 280 MPa festgestellt, wobei der Anteil der monoklinen Modifikation auf > 80 % angestiegen ist. Gleichzeitig wird eine gegenüber der Ausgangsdichte von 5,73 geringere Dichte von 5,65 g/cm³ festgestellt.

Vergleichsbeispiel 3:

Es wird eine Mischung von:
4,5 Gew.% MgO
2 Gew.% $Y_2O_3$
Rest $ZrO_2$ eingesetzt.
Der hergestellte Sinterformkörper hat eine zu 100 % aus der kubischen Modifikation vorliegende Phase, weist aber nur eine sehr geringe Bruchfestigkeit $\sigma_B$ von 150 MPa auf. Die mittlere Korngröße liegt bei 50 µm.

Beispiel 1:

Nachfolgende Pulvermischung wird eingesetzt:
3 Gew.% MgO
1 Gew.% $Y_2O_3$
96 Gew.% $ZrO_2$
10,4 % MgO wurden durch grammäquivalente Mengen von $Y_2O_3$ ersetzt, bezogen auf die Gesamtmenge an stabilisierenden Oxiden.
Die ermittelten Anteile der einzelnen Modifikationen des teilstabilisierten Zirkonoxids liegen bei:

| | |
|---|---|
| monoklin: | 3 % |
| tetragonal: | 50 % |
| kubisch: | 47 %. |

7

Der Sinterformkörper weist eine Dichte von 5,8 g/cm³ und eine Biegebruchfestigkeit $\sigma_B$ von 500 MPa auf. Die mittlere Korngröße liegt bei 55 $\mu$m.

Nach einer Temperaturbelastung bei 1000 °C weist der Körper nach 1000 Stunden eine Biegebruchfestigkeit $\sigma_B$ von 515 MPa auf. Der Anteil der monoklinen Modifikation liegt bei < 10 %. Gleichzeitig liegt die Dichte unverändert bei 5,8 g/cm³.

Beispiel 2:

Nachfolgende Pulvermischung kommt zum Einsatz:

2,3 Gew.% MgO
3,2 Gew.% $Y_2O_3$
94,5 Gew.% $ZrO_2$
Die mittlere Korngröße liegt bei 56 $\mu$m.
33 % MgO wurden durch eine grammäquivalente Menge $Y_2O_3$ ersetzt.

Der Körper hat eine Biegebruchfestigkeit $\sigma_B$ von 600 MPa und weist die nachfolgenden Anteile der einzelnen Modifikationen auf:

**monokline Modifikation:** 2 %

**tetragonale Modifikation:** 50 %

**kubische Modifikation:** 48 %

Die Dichte liegt bei 5,85 g/cm³.
Bei 1000 °C und 1000 h ergibt sich keine Veränderung der Bruchfestigkeit, der Phasenzusammensetzung und Dichte.

Der Einfluß der Temperaturbelastung bei 1100 °C geht aus der nachfolgenden Tabelle hervor:

**Tabelle:**

| Zeit (h) | Dichte (g/cm³) | Bruchfestig-keit (MPa) | Anteile der monokl.Modifikat. % |
|---|---|---|---|
| 10 | 5,85 | 535 | kleiner 5 |
| 30 | 5,84 | 514 | kleiner 5 |
| 100 | 5,84 | 551 | kleiner 5 |
| 700 | 5,84 | 627 | kleiner 9 |

Beispiel 3:

Nachfolgende Pulvermischung kommt zum Einsatz:
2 Gew.% MgO
3 Gew.% $Y_2O_3$
85 Gew.% $ZrO_2$
10 Gew.% Spinell ($MgAl_2O_4$)
Die mittlere Korngröße liegt bei 11,7 $\mu$m.
35 % der MgO-Stabilisierung wurden durch eine grammäquivalente Menge $Y_2O_3$ substituiert.

Der Körper hat eine Biegebruchfestigkeit $\sigma_B$ von 670 MPA. Das teilstabilisierte Zirkoniumoxid weist die nachfolgenden Modifikationen auf:

monokline Modifikation:       1 %

tetragonale Modifikation:    43 %

kubische Modifikation:       56 %

Die Dichte liegt bei 5,47 g/cm³.
Bei 1000 °C und 1000 h ergibt sich keine Veränderung der Bruchfestigkeit, der Phasenzusammensetzung und Dichte.
Der Einfluß der Temperaturbelastung bei 1100 °C geht aus der nachfolgenden Tabelle hervor:

**Tabelle:**

| Zeit (h) | Dichte (g/cm³) | Bruchfestig- keit (MPa) | Anteile der monokl.Modifikat. % |
|---|---|---|---|
| 0 | 5,47 | 670 | |
| 10 | 5,47 | 740 | |
| 30 | 5,47 | 800 | kleiner 5 |
| 100 | 5,44 | 790 | |
| 300 | 5,43 | 830 | |

Beispiel 4:

Nachfolgende pulvermischung wird eingesetzt:
2,7 Gew.% MgO
1,7 Gew.% Y₂O₃
95,6 Gew.% ZrO₂
19 % des Magnesiumoxids wurden durch eine grammäquivalente Y₂O₃-Menge substituiert.
Der Einfluß der Temperaturbelastung bei 1000 °C geht aus der nachfolgenden Tabelle hervor:

**Tabelle:**

| Zeit (h) | Dichte (g/cm³) | Bruchfestig- keit (MPa) | Anteile der monokl.Modifikat. % |
|---|---|---|---|
| 24 | 5,85 | 475 | < 1 |
| 500 | 5,84 | 490 | < 1 |
| 700 | 5,83 | 530 | < 1 |
| 1000 | 5,82 | 560 | < 4 |

Beispiel 5:

Nachfolgende pulvermischung kommt zum Einsatz:
2,5 Gew.% MgO

1,9 Gew.% $Y_2O_3$
95,6 Gew.% $ZrO_2$
22 % des zugegebenen Magnesiumoxids sind durch eine grammäquivalente $Y_2O_3$-Menge ersetzt.
Der Einfluß der Temperaturbelastung bei 1000 °C geht aus der nachfolgenden Tabelle hervor:

## Tabelle:

| Zeit (h) | Dichte (g/cm³) | Bruchfestig-keit (MPa) | Anteile der monokl.Modifikat. |
|---|---|---|---|
| 24 | 5,83 | 603 | < 1 |
| 500 | 5,82 | 561 | < 4 |
| 700 | 5,81 | 611 | < 4 |
| 1000 | 5,79 | 608 | < 6 |

Beispiel 6:

Nachfolgende Pulvermischung kommt zum Einsatz:
3 Gew.% MgO
1,5 Gew.% $Y_2O_3$
95,5 Gew.% $ZrO_2$
15 % des Magnesiumoxids wurden durch eine grammäquivalente $Y_2O_3$-Menge substituiert.
Der Einfluß der Temperaturbelastung bei 1000 °C geht aus der nachfolgenden Tabelle hervor:

## Tabelle:

| Zeit (h) | Dichte (g/cm³) | Bruchfestig-keit (MPa) | Anteile der monokl.Modifikat. % |
|---|---|---|---|
| 10 | 5,78 | 405 | < 2 |
| 100 | 5,77 | 475 | < 3 |
| 500 | 5,77 | 530 | < 5 |
| 1000 | 5,76 | 483 | < 10 |

Beispiel 7:

Nachfolgende Pulvermischung kommt zur Einsatz:
2,7 Gew.% MgO
1,8 Gew.% $Y_2O_3$
10 Gew.% $MgAl_2O_4$
85,5 Gew.% $ZrO_2$
19 % der Magnesiumoxid-Stabilisierung wurden durch eine grammäquivalente $Y_2O_3$-Menge substituiert.
Der Einfluß der Temperaturbelastung bis 1000 °C geht aus der nachfolgenden Tabelle hervor:

Tabelle:

| Zeit (h) | Dichte (g/cm$^3$) | Bruchfestig-keit (MPa) | Anteile der monokl.Modifikat. |
|---|---|---|---|
| 0 | 5,47 | 590 | - |
| 10 | 5,47 | 615 | - |
| 100 | 5,47 | 650 | < 1 |
| 500 | 5,47 | 677 | < 2 |
| 1000 | 5,46 | 458 | < 6 |

Beispiel 8:

Nachfolgende Pulvermischung kommt zum Einsatz:
1,6 Gew.% $Y_2O_3$
1,1 Gew.% CaO
1,9 Gew.% MgO
95,4 Gew.% $ZrO_2$
Die Mischung der stabilisierenden Oxide besteht zu 18 % aus Yttriumoxid - bezogen auf Val.% der Gesamtmischung von stabilisierenden Oxiden.
Der Einfluß der Temperaturbelastung bei 1000 °C geht aus der nachfolgenden Tabelle hervor:

Tabelle:

| Zeit (h) | Dichte (g/cm$^3$) | Bruchfestig-keit (MPa) | Anteile der monokl.Modifikat. |
|---|---|---|---|
| 0 | 5,88 | 412 | 0 |
| 10 | 5,87 | 405 | 0 |
| 100 | 5,86 | 423 | 0 |
| 300 | 5,88 | 472 | 0 |
| 1000 | 5,87 | 443 | 1 |

Beispiel 9:

Nachfolgende Pulvermischung wird eingesetzt:
2,4 Gew.% CaO
3,3 Gew.% $Y_2O_3$
94,3 Gew.% $ZrO_2$
41 % des Calciumoxids wurden durch eine grammäquivalente Yttriumoxidmenge substituiert.
Der Einfluß der Temperaturbelastung bei 1000 °C geht aus der nachfolgenden Tabelle hervor:

## Tabelle:

| Zeit (h) | Dichte $(g/cm^3)$ | Bruchfestig- keit (MPa) | Anteile der monokl.Modifikat. |
|---|---|---|---|
| 0 | 5,76 | 396 | 1 |
| 120 | 5,75 | 408 | 1 |
| 360 | 5,76 | 405 | 1 |
| 1000 | 5,74 | 412 | 2 |

Beispiel 10:

Nachfolgende Pulvermischung wird eingesetzt:
1,8 Gew.% MgO
3,8 Gew.% $Y_2O_3$
94,4 Gew.% $ZrO_2$

43 % der Magnesiumoxid-Stabilisierung wurden durch eine grammäquivalente $Y_2O_3$-Menge substituiert.
Der Einfluß der Temperaturbelastung bei Temperaturen von 1100 °C bis 1400 °C geht aus den nachfolgenden Tabellen hervor:

Temperaturbelastung bei 1100 °C

| Zeit (h) | Dichte $(g/cm^3)$ | Bruchfestig- keit (MPa) | Anteile der monokl.Modifikat. |
|---|---|---|---|
| 0 | 5,86 | 460 | 1 |
| 24 | 5,86 | 480 | 1 |
| 112 | 5,86 | 570 | 1 |
| 192 | 5.85 | 565 | 1 |
| 288 | 5,87 | 608 | 1 |
| 1000 | 5,85 | 606 | 1 |

Temperaturbelastung bei 1200 °C

| Zeit (h) | Dichte g/cm$^3$) | Bruchfestig-keit (MPa) | Anteile der monokl.Modifikat. |
|---|---|---|---|
| 0 | 5,86 | 460 | 1 |
| 20 | 5,84 | 400 | 1 |
| 120 | 5,86 | 444 | 1 |
| 180 | 5,86 | 547 | 1 |
| 350 | 5,85 | 529 | 1 |

Temperaturbelastung bei 1300 $^\circ$C

| Zeit (h) | Dichte g/cm$^3$) | Bruchfestig-keit (MPa) | Anteile der monokl.Modifikat. |
|---|---|---|---|
| 0 | 5,86 | 460 | 1 |
| 50 | 5,87 | 551 | 2 |
| 120 | 5,86 | 486 | 2 |
| 300 | 5,87 | 565 | 5 |

Temperaturbelastung bei 1400 $^\circ$C

| Zeit (h) | Dichte g/cm$^3$) | Bruchfestig-keit (MPa) | Anteile der monokl.Modifikat. |
|---|---|---|---|
| 0 | 5,86 | 460 | 1 |
| 50 | 5,86 | 492 | 3 |
| 120 | 5,87 | 538 | 4 |
| 150 | 5,86 | 529 | 6 |

**Ansprüche**

1. Sinterformkörper, bestehend aus teilstabilisiertem Zirkoniumoxid, wobei
   a) das Zirkoniumoxid mit einer Mischung von Oxiden stabilisiert ist, die rechnerisch einer äquivalenten Zusatzmenge von 2,9 bis 3,6 Gew.% Magnesiumoxid
      - bezogen auf die Gesamtzusammensetzung des teilstabilisierten Zirkoniumoxids - entspricht,
      - die Mischung der stabilisierenden Oxide neben Magnesiumoxid und/oder einer grammäquivalenten Menge Calciumoxid noch aus Yttriumoxid besteht und die rechnerisch auf Magnesiumoxid bezogene Zusatzmenge an stabilisierenden Oxiden zu 20 bis 50 % durch eine grammäquivalente Menge Yttriumoxid substituiert ist - die stabilisierenden Oxide homogen in dem

EP 0 200 954 B1

Zirkoniumoxid verteilt sind,

b) - das Zirkoniumoxid aus in der kubischen Phase vorliegenden Zirkoniumoxidkörnern mit einer mittleren Größe von 5 bis 100 $\mu$m besteht, in denen tetragonale und monokline Phasenanteile in Form von Ausscheidungen vorliegen,

c) - die Phasenanteile des teilstabilisierten Zirkoniumoxids sich wie folgt zusammensetzen:
kubische Modifikation: 40 vol % bis weniger als 50 Vol.%
tetragonale Modifikation: mehr als 45 Vol.% bis 60 Vol.%
monokline Modifikation: < 5 Vol.%,
wobei sich die Anteile der verschiedenen Modifikationen auf 100 Vol.% ergänzen -gemessen bei Raumtemperatur an der spiegelglanzpolierten Oberfläche des Sinterformkörpers.

2. Sinterformkörper nach Anspruch 1, dadurch gekennzeichnet, daß das teilstabilisierte Zirkoniumoxid in einer mittleren Korngröße von 5 bis 70 $\mu$m vorliegt.

3. Sinterformkörper nach einem der Ansprüche 1 und 2, dadurch gekennzeichnet, daß der Sinterformkörper nach einer Temperaturbelastung von 1000 h bei 1000 $^\circ$C eine Biegebruchfestigkeit $\sigma_B$ 400 MPa aufweist.

4. Sinterformkörper, bestehend aus teilstabilisiertem Zirkoniumoxid, wobei

a) das Zirkoniumoxid mit einer Mischung von Oxiden stabilisiert ist, die rechnerisch einer äquivalenten Zusatzmenge von 2,9 bis 3,6 Gew.% Magnesiumoxid
- bezogen auf die Gesamtzusammensetzung des teilstabilisierten Zirkoniumoxids - entspricht,
- die Mischung der stabilisierenden Oxide neben Magnesiumoxid und/oder einer grammäquivalenten Menge Calciumoxid noch aus Yttriumoxid besteht und die rechnerisch auf Magnesiumoxid bezogene Zusatzmenge an stabilisierenden Oxiden zu 40 bis 70 % durch eine grammäquivalente Menge Yttriumoxid substituiert ist - die stabilisierenden Oxide homogen in dem Zirkoniumoxid verteilt sind,

b) - das Zirkoniumoxid aus in der kubischen Phase vorliegenden zirkoniumoxidkörnern mit einer mittleren Größe von 5 bis 100 $\mu$m besteht, in denen tetragonale und monokline Phasenanteile in Form von Ausscheidungen vorliegen,

c) - die Phasenanteile des teilstabilisierten Zirkoniumoxids sich wie folgt zusammensetzen:
kubische Modifikation: 40 Vol % bis weniger als 50 Vol.%
tetragonale Modifikation: mehr als 45 Vol.% bis 60 Vol.%
monokline Modifikation: < 1 Vol.%,
wobei sich die Anteile der verschiedenen Modifikationen auf 100 Vol.% ergänzen -gemessen bei Raumtemperatur an der spiegelglanzpolierten Oberfläche des Sinterformkörpers.

d) der Sinterformkörper nach einer Temperaturbelastung von 150 h und 1400 $^\circ$C einen monoklinen Phasenanteil < 10 Vol % und eine Biegebruchfestigkeit > 400 MPa aufweist.

5. Sinterformkörper, bestehend aus teilstabilisiertem Zirkoniumoxid und 5 bis 20 Gew.% Spinell $(MgAl_2O_4)$, wobei

a) das Zirkoniumoxid mit einer Mischung von Oxiden stabilisiert ist, die rechnerisch einer äquivalenten Zusatzmenge von 2,5 bis 4,5 Gew.% Magnesiumoxid
- bezogen auf die Gesamtzusammensetzung des teilstabilisierten Zirkoniumoxids - entspricht,
- die Mischung der stabilisierenden Oxide neben Magnesiumoxid und/oder einer grammäquivalenten Menge Calciumoxid noch aus Yttriumoxid besteht und die rechnerisch auf Magnesiumoxid bezogene Zusatzmenge an stabilisierenden Oxiden zu 10 bis 70 % durch eine grammäquivalente Menge Yttriumoxid substituiert ist - die stabilisierenden Oxide homogen in dem Zirkoniumoxid verteilt sind,

b) - das Zirkoniumoxid aus in der kubischen Phase vorliegenden Zirkoniumoxidkörnern mit einer mittleren Größe von 5 bis 100 $\mu$m besteht, in denen tetragonale und monokline Phasenanteile in Form von Ausscheidungen vorliegen,

c) - die Phasenanteile des teilstabilisierten Zirkoniumoxids sich wie folgt zusammensetzen:
40 bis 70 Vol.% kubische Modifikation
30 bis 60 Vol.% tetragonale Modifikation
und bis zu 10 Vol.% monokline Modifikation,
wobei sich die Anteile der verschiedenen Modifikatonen auf 100 Vol.% ergänzen - gemessen bei Raumtemperatur an der spiegelglanzpolierten Oberfläche des Sinterformkörpers.

14

6. Verfahren zum Herstellen eines Sinterformkörpers nach einem der Ansprüche 1 bis 3 oder 4, dadurch gekennzeichnet, daß die das Zirkoniumoxid und die Mischung von stabilisierenden Oxiden enthaltende Mischung unter Zusatz eines Dispergierungsmittels naßgemahlen und nach Sprühtrocknung aus der Pulvermischung ein Körper gepreßt wird und dieser auf eine zur Erzeugung der kubischen Phase ausreichende Temperatur von mindestens 1600° C erhitzt wird und nach einer Haltezeit von mindestens 0,5 h zur Erzeugung tetragonaler Ausscheidungen in den in der kubischen Phase vorliegenden Matrixkörnern im kubisch/tetragonalen 2-Phasengebiet getempert wird, während der Sinterformkörper mit einer Abkühlrate von 250° C/h bis 400° C/h auf Raumtemperatur abgekühlt wird.

7. Verfahren zum Herstellen eines Sinterformkörpers nach einem der Ansprüche 1 bis 3 oder 4, dadurch gekennzeichnet, daß die das Zirkoniumoxid und die Mischung von stabilisierenden Oxiden enthaltende Mischung unter Zusatz eines Dispergierungsmittels naßgemahlen und nach Sprühtrocknung aus der Pulvermischung ein Körper gepreßt wird und dieser auf eine zur Erzeugung der kubischen Phase ausreichende Temperatur von mindestens 1600° C erhitzt wird, daß der Sinterformkörper nach einer Haltezeit von mindestens 0,5 h mit einer Abkühlrate von mehr als 1000° C/h auf weniger als 1000° C abgekühlt wird, worauf der Sinterformkörper anschließend für eine Zeit von 0,5 bis 2 h bei einer Temperatur im Bereich von 1350° C bis 1450° C getempert und anschließend auf Raumtemperatur abgekühlt wird.

8. Verfahren zum Herstellen eines Sinterformkörpers nach Anspruch 5, dadurch gekennzeichnet, daß eine aus Zirkoniumoxid mit einem Zusatz von 5 bis 20 Gew.% Spinell (MgAl$_2$O$_4$) bestehende Mischung unter Zusatz der stabilisierenden Oxide und unter Zusatz eines Dispergierungsmittels naßgemahlen wird, nach Sprühtrocknung aus der Pulvermischung ein Körper gepreßt und dieser auf eine zur Erzeugung der kubischen Phase ausreichende Temperatur von mindestens 1600° C erhitzt wird und nach einer Haltezeit von mindestens 0,5 h zur Erzeugung tetragonaler Ausscheidungen in den in der kubischen Phase vorliegenden Matrixkörnern im kubisch/tetragonalen 2-Phasengebiet getempert wird, während der Sinterformkörper mit einer Abkühlrate von 250° C/h bis 400° C/h auf Raumtemperatur abgekühlt wird.

9. Verfahren zum Herstellen eines Sinterformkörpers nach Anspruch 5, dadurch gekennzeichnet, daß eine aus Zirkoniumoxid mit einem Zusatz von 5 bis 20 Gew.% Spinell (MgAl$_2$O$_4$) bestehende Mischung unter Zusatz der stabilisierenden Oxide und unter Zusatz eines Dispergierungsmittels naßgemahlen wird, nach Sprühtrocknung aus der Pulvermischung ein Körper gepreßt und dieser auf eine zur Erzeugung der kubischen Phase ausreichende Temperatur von mindestens 1600° C erhitzt wird und nach einer Haltezeit von mindestens 0,5 h mit einer Abkühlrate von mehr als 1000° C/h auf weniger als 1000° C abgekühlt wird, worauf der Sinterformkörper anschließend für eine Zeit von 0,5 bis 2 h bei einer Temperatur im Bereich von 1350° C bis 1450° C getempert und anschließend auf Raumtemperatur abgekühlt wird.

10. Verwendung des Sinterformkörpers nach einem der Ansprüche 1 bis 5 für ein bei Temperaturen von über 900° C dauerbelastetes Bauteil.

**Patentansprüche für folgenden Vertragsstaat: IT**

1. Sinterformkörper, der aus teilstabilisiertem Zirkoniumoxid als alleinige Komponente besteht oder der teilstabilisiertes Zirkoniumoxid als überwiegende Komponente in Abmischung mit Spinell (MgAl$_2$O$_4$) enthält, wobei
    a) das Zirkoniumoxid mit einer Mischung von Oxiden stabilisiert ist, die rechnerisch einer äquivalenten Zusatzmenge von 2,5 bis 4,5 Gew.% Magnesiumoxid
        - bezogen auf die Gesamtzusammensetzung des teilstabilisierten Zirkoniumoxids - entspricht,
        - die Mischung der stabilisierenden Oxide neben Magnesiumoxid und/oder einer grammäquivalenten Menge Calciumoxid noch aus Yttriumoxid besteht und die rechnerisch auf Magnesiumoxid bezogene Zusatzmenge an stabilisierenden Oxiden zu 10 bis 70 % durch eine grammäquivalente Menge Yttriumoxid substituiert ist - die stabilisierenden Oxide homogen in dem Zirkoniumoxid verteilt sind,
    b) - das Zirkoniumoxid aus in der kubischen Phase vorliegenden Zirkoniumoxidkörnern mit einer mittleren Größe von 5 bis 100 $\mu$m besteht, in denen tetragonale und monokline Phasenanteile in Form von Ausscheidungen vorliegen,

15

c) - die Phasenanteile des teilstabilisierten Zirkoniumoxids sich wie folgt zusammensetzen:
40 bis 70 Vol.% kubische Modifikation
30 bis 60 Vol.% tetragonale Modifikation
und bis zu 10 Vol.% monokline Modifikation,
wobei sich die Anteile der verschiedenen Modifikatonen auf 100 Vol.% ergänzen - gemessen bei Raumtemperatur an der spiegelglanzpolierten Oberfläche des Sinterformkörpers.

2. Sinterformkörper nach Anspruch 1, dadurch gekennzeichnet, daß er außer dem teilstabilisierten Zirkoniumoxid Spinell ($MgAl_2O_4$) in einer Menge von 5 bis 20 Gew.% enthält.

3. Sinterformkörper nach einem der Ansprüche 1 und 2, dadurch gekennzeichnet, daß das teilstabilisierte Zirkoniumoxid in einer mittleren Korngröße von 5 bis 70 $\mu$m vorliegt.

4. Sinterformkörper nach einem der Ansprüche 1 bis 3, dadurch gekennzeichnet, daß das teilstabilisierte Zirkoniumoxid eine Mischung der stabilisierenden Oxide enthält, die rechnerisch einer äquivalenten Menge von 2,6 bis 4,0 Gew.% Magnesiumoxid entspricht.

5. Sinterformkörper nach einem der Ansprüche 1 bis 4, dadurch gekennzeichnet, daß das teilstabilisierte Zirkoniumoxid eine Mischung der stabilisierenden Oxide enthält, die rechnerisch einer äquivalenten Menge von 2,9 bis 3,6 Gew.% Magnesiumoxid entspricht.

6. Sinterformkörper nach einem der Ansprüche 1 bis 5, dadurch gekennzeichnet, daß das Magnesiumoxid zu 20 bis 50 % durch grammäquivalente $Y_2O_3$-Mengen substituiert ist.

7. Sinterformkörper nach einem der Ansprüche 1 bis 6 dadurch gekennzeichnet, daß der Anteil der monoklinen Modifikation < 5 Vol.%, bezogen auf Gesamtkristallphase des teilstabilisierten Zirkoniumoxids ist.

8. Sinterformkörper nach einem der Ansprüche 1 bis 7, dadurch gekennzeichnet, daß der Sinterformkörper nach einer Temperaturbelastung von 1000 h bei 1000 °C eine Biegebruchfestigkeit $\sigma_B$ > 400 MPa aufweist.

9. Sinterformkörper nach einem der Ansprüche 1 bis 8, dadurch gekennzeichnet, daß der Sinterformkörper aus einem teilstabilisierten Zirkoniumoxid besteht, das als Mischung stabilisierender Oxide neben Magnesiumoxid und/oder einer grammäquivalenten Menge Calziumoxid noch Yttriumoxid in einer rechnerisch 2,9 - 3,6 Gew.% Magnesiumoxid entsprechenden Menge enthält, wobei die rechnerisch auf Magnesiumoxid bezogene Zusatzmenge an stabilisierenden Oxiden zu 40 - 70 % durch eine grammäquivalente Menge Yttriumoxid substituiert ist, wobei ferner der Sinterformkörper bei Raumtemperatur einen Anteil der monoklinen Phase von < 1 vol % und nach einer Temperaturbelastung von 150 h und 1400 °C einen monoklinen Phasenanteil < 10 vol % und eine Biegebruchfestigkeit > 400 MPa aufweist.

10. Verfahren zum Herstellen eines Sinterformkörpers nach einem der Ansprüche 1 bis 9, dadurch gekennzeichnet, daß Zirkoniumoxid und eine Mischung von stabilisierenden Oxiden, die einer rechnerischen Zusatzmenge von 2,5 bis 4,5 Gew.% Magnesiumoxid - bezogen auf die Gesamtzusammensetzung des teilstabilisierten Zirkoniumoxids - entspricht, wobei die Mischung der stabilisierenden Oxide neben Magnesiumoxid und/oder einer grammäquivalenten Menge Calciumoxid noch aus Yttriumoxid besteht und die rechnerisch auf Magnesiumoxid bezogene Zusatzmenge an stabilisierenden Oxiden zu 10 bis 70 % durch grammäquivalente Mengen von Yttriumoxid substituiert ist oder eine solche Mischung, die zusätzlich Spinell ($MgAl_2O_4$) enthält, unter Zusatz eines Dispergierungsmittels naßgemahlen und nach Sprühtrocknung aus der Pulvermischung ein Körper gepreßt wird und dieser auf eine zur Erzeugung der kubischen Phase ausreichende Temperatur von mindestens 1600 °C erhitzt wird und nach einer Haltezeit von mindestens 0,5 h zur Erzeugung tetragonaler Ausscheidungen in den in der kubischen Phase vorliegenden Matrixkörnern im kubisch/tetragonalen 2-Phasengebiet getempert wird, während der Sinterformkörper mit einer Abkühlrate von 250 °C/h bis 400 °C/h auf Raumtemperatur abgekühlt wird.

11. Verfahren zum Herstellen eines Sinterformkörpers nach einem der Ansprüche 1 bis 9, dadurch gekennzeichnet, daß Zirkoniumoxid und eine Mischung von stabilisierenden Oxiden, die einer rechneri-

EP 0 200 954 B1

schen Zusatzmenge von 2,5 bis 4,5 Gew.% Magnesiumoxid - bezogen auf die Gesamtzusammensetzung des teilstabilisierten Zirkoniumoxids - entspricht, wobei die Mischung der stabilisierenden Oxide neben Magnesiumoxid und/oder einer grammäquivalenten Menge Calciumoxid noch aus Yttriumoxid besteht und die rechnerisch auf Magnesiumoxid bezogene Zusatzmenge an stabilisierenden Oxiden zu 10 bis 70 % durch grammäquivalente Mengen von Yttriumoxid substituiert ist oder eine solche Mischung, die zusätzlich Spinell (MgAl$_2$O$_4$) enthält, unter Zusatz eines Dispergierungsmittels naßgemahlen und nach Sprühtrocknung aus der Pulvermischung ein Körper gepreßt wird und dieser auf eine zur Erzeugung der kubischen Phase ausreichende Temperatur von mindestens 1600 °C erhitzt wird und nach einer Haltezeit von mindestens 0,5 h zur Erzeugung tetragonaler Ausscheidungen in den in der kubischen Phase vorliegenden Matrixkörnern mit einer Abkühlrate von mehr als 1000 °C/h auf weniger als 1000 °C abgekühlt. wird, worauf der Sinterformkörper anschließend für eine Zeit von 0,5 bis 2 h bei einer Temperatur im Bereich von 1350 °C bis 1450 °C getempert und anschließend auf Raumtemperatur abgekühlt wird.

12. Verwendung des Sinterformkörpers nach einem der Ansprüche 1 bis 9 für ein bei Temperaturen von über 900 °C dauerbelastetes Bauteil.

**Claims**

1. Sintered moulded body, comprising partially stabilized zirconium oxide, in which
   a) the zirconium oxide is stabilized with a mixture of oxides which is calculated to correspond to an equivalent added amount of 2.9 to 3.6 weight % of magnesium oxide, based on the total composition of the partially stabilized zirconium oxide,
   the mixture of the stabilizing oxides also comprises yttrium oxide in addition to magnesium oxide and/or a gram-equivalent amount of calcium oxide, and 20 to 50% of the added amount of stabilizing oxides calculated as magnesium oxide is replaced by a gram-equivalent amount of yttrium oxide,
   the stabilizing oxides are distributed homogeneously in the zirconium oxide,
   b) the zirconium oxide comprises zirconium oxide grains of a mean size of 5 to 100 $\mu$m present in the cubic phase, in which grains tetragonal and monoclinic phase portions are present in the form of precipitates,
   c) the phase portions of the partially stabilized zirconium oxide, measured at room temperature at the mirror-bright polished surface of the sintered moulded body, are constituted as follows:
   cubic modification: 40 volume % to less than 50 volume %,
   tetragonal modification: more than 45 volume % to 60 volume %,
   monoclinic modification: < 5 volume %,
   the portions of the different modifications adding up to 100 volume %.

2. A sintered moulded body according to claim 1, characterized in that the partially stabilized zirconium oxide has a mean grain size of 5 to 70 $\mu$m.

3. A sintered moulded body according to one of claims 1 and 2, characterized in that the sintered moulded body has a bending strength $\sigma_B$ > 400 MPa after being subjected to a temperature of 1000 °C for 1000 h.

4. Sintered moulded body, comprising partially stabilized zirconium oxide, in which
   a) the zirconium oxide is stabilized with a mixture of oxides which is calculated to correspond to an equivalent added amount of 2.9 to 3.6 weight % of magnesium oxide, based on the total composition of the partially stabilized zirconium oxide,
   the mixture of the stabilizing oxides also comprises yttrium oxide in addition to magnesium oxide and/or a gram-equivalent amount of calcium oxide, and 40 to 70% of the added amount of stabilizing oxides calculated as magnesium oxide is replaced by a gram-equivalent amount of yttrium oxide,
   the stabilizing oxides are distributed homogeneously in the zirconium oxide,
   b) the zirconium oxide comprises zirconium oxide grains of a mean size of 5 to 100 $\mu$m present in the cubic phase, in which grains tetragonal and monoclinic phase portions are present in the form of precipitates,
   c) the phase portions of the partially stabilized zirconium oxide, measured at room temperature at the mirror-bright polished surface of the sintered moulded body, are constituted as follows:
   cubic modification: 40 volume % to less than 50 volume %,

17

tetragonal modification: more than 45 volume % to 60 volume %,

monoclinic modification: < 1 volume %,

the portions of the different modifications adding up to 100 volume %,

d) after a being subjected to a temperature of 1400 °C for 150 h, the sintered moulded body has a monoclinic phase portion < 10 volume % and a bending strength $\sigma_B$ > 400 MPa.

5. A sintered moulded body, comprising partially stabilized zirconium oxide and 5 to 20 weight % of spinel ($MgAl_2O_4$), in which

a) the zirconium oxide is stabilized with a mixture of oxides which is calculated to correspond to an equivalent added amount of 2.5 to 4.5 weight % of magnesium oxide, based on the total composition of the partially stabilized zirconium oxide,

the mixture of the stabilizing oxides also comprises yttrium oxide in addition to magnesium oxide and/or a gram-equivalent amount of calcium oxide, and 10 to 70% of the added amount of stabilizing oxides calculated as magnesium oxide is replaced by a gram-equivalent amount of yttrium oxide,

the stabilizing oxides are distributed homogeneously in the zirconium oxide,

b) the zirconium oxide comprises zirconium oxide grains of a mean size of 5 to 100 $\mu$m present in the cubic phase, in which grains tetragonal and monoclinic phase portions are present in the form of precipitates,

c) the phase portions of the partially stabilized zirconium oxide, measured at room temperature at the mirror-bright polished surface of the sintered moulded body, are constituted as follows:

40 to 70 volume % cubic modification,

30 to 60 volume % tetragonal modification, and

up to 10 volume % monoclinic modification,

the portions of the different modifications adding up to 100 volume %.

6. A process for the manufacture of a sintered moulded body according to one of claims 1 to 3 or 4, characterized in that the mixture containing the zirconium oxide and the mixture of stabilizing oxides is wet-ground with the addition of a dispersing agent and, after spray-drying, a body is pressed from the powder mixture and is heated to a temperature of at least 1600 °C to produce the cubic phase and, after a dwell time of at least 0.5 h, is tempered to produce tetragonal precipitates in the matrix grains present in the cubic phase in the cubic/tetragonal 2-phase region as the sintered moulded body is being cooled to room temperature at a cooling rate of 250 °C/h to 400 °C/h .

7. A process for the manufacture of a sintered moulded body according to one of claims 1 to 3 or 4, characterized in that the mixture containing the zirconium oxide and the mixture of stabilizing oxides is wet-ground with the addition of a dispersing agent and, after spray-drying, a body is pressed from the powder mixture and is heated to a temperature of at least 1600 °C to produce the cubic phase and, after a dwell time of at least 0.5 h, the sintered moulded body is cooled to less than 1000 °C at a cooling rate of more than 1000 °C/h, whereupon the sintered moulded body is subsequently tempered for a period of 0.5 to 2 h at a temperature in the range from 1350 °C to 1450 °C and subsequently cooled to room temperature.

8. A process for the manufacture of a sintered moulded body according to claim 5, characterized in that a mixture comprising zirconium oxide with an addition of 5 to 20 weight % of spinel ($MgAl_2O_4$) is wet-ground with the addition of the stabilizing oxides and with the addition of a dispersing agent, after spray-drying a body is pressed from the powder mixture and is heated to a temperature of at least 1600 °C to produce the cubic phase and, after a dwell time of at least 0.5 h, is tempered to produce tetragonal precipitates in the matrix grains present in the cubic phase in the cubic/tetragonal 2-phase region as the sintered moulded body is being cooled to room temperature at a cooling rate of 250 °C/h to 400 °C/h .

9. A process for the manufacture of a sintered moulded body according to claim 5, characterized in that a mixture comprising zirconium oxide with an addition of 5 to 20 weight % of spinel ($MgAl_2O_4$) is wet-ground with the addition of the stabilizing oxides and with the addition of a dispersing agent, after spray-drying a body is pressed from the powder mixture and is heated to a temperature at least 1600 °C to produce the cubic phase and, after a dwell time of at least 0.5 h, is cooled to less than 1000 °C at a cooling rate of more than 1000 °C/h, whereupon the sintered moulded body is subsequently tempered for a period of 0.5 to 2 h at a temperature in the range from 1350 °C to 1450 °C and subsequently cooled to room temperature.

10. Use of the sintered moulded body according to one of claims 1 to 5 for a component that is continuously subjected to temperatures of more than 900°C.

**Claims for the following contracting state: IT**

1. Sintered moulded body, which comprises partially stabilized zirconium oxide as the sole component, or which contains partially stabilized zirconium oxide as the predominant component in admixture with spinel ($MgAl_2O_4$), in which
   a) the zirconium oxide is stabilized with a mixture of oxides which is calculated to correspond to an equivalent added amount of 2.5 to 4.5 weight % of magnesium oxide, based on the total composition of the partially stabilized zirconium oxide, the mixture of the stabilizing oxides also comprises yttrium oxide in addition to magnesium oxide and/or a gram-equivalent amount of calcium oxide, and 10 to 70% of the added amount of stabilizing oxides calculated as magnesium oxide is replaced by a gram-equivalent amount of yttrium oxide,
   the stabilizing oxides are distributed homogeneously in the zirconium oxide,
   b) the zirconium oxide comprises zirconium oxide grains of a mean size of 5 to 100 $\mu$m present in the cubic phase, in which grains tetragonal and monoclinic phase portions are present in the form of precipitates,
   c) the phase portions of the partially stabilized zirconium oxide, measured at room temperature at the mirror-bright polished surface of the sintered moulded body, are constituted as follows:
   40 to 70 volume % of cubic modification,
   30 to 60 volume % of tetragonal modification,
   and up to 10 volume % of monoclinic modification,
   the portions of the different modifications adding up to 100 volume %.

2. A sintered moulded body according to claim 1, characterized in that, apart from the partially stabilized zirconium oxide, it contains spinel ($MgAl_2O_4$) in an amount from 5 to 20 weight %.

3. A sintered moulded body according to one of claims 1 and 2, characterized in that the partially stabilized zirconium oxide has a mean grain size of 5 to 70 $\mu$m.

4. A sintered moulded body according to one of claims 1 to 3, characterized in that the partially stabilized zirconium oxide contains a mixture of the stabilizing oxides which is calculated to correspond to an equivalent amount of 2.6 to 4.0 weight % of magnesium oxide.

5. A sintered moulded body according to one of claims 1 to 4, characterized in that the partially stabilized zirconium oxide contains a mixture of the stabilizing oxides which is calculated to correspond to an equivalent amount of 2.9 to 3.6 weight % of magnesium oxide.

6. A sintered moulded body according to one of claims 1 to 5, characterized in that 20 to 50% of the magnesium oxide is replaced by gram-equivalent amounts of $Y_2O_3$.

7. A sintered moulded body according to one of claims 1 to 6, characterized in that the portion of the monoclinic modification is < 5 volume %, based on the total crystalline phase of the partially stabilized zirconium oxide.

8. A sintered moulded body according to one of claims 1 to 7, characterized in that the sintered moulded body has a bending strength $\sigma_B$ > 400 MPa after being subjected to a temperature of 1000°C for 1000 h.

9. A sintered moulded body according to one of claims 1 to 8, characterized in that the sintered moulded body comprises a partially stabilized zirconium oxide which, as the mixture of stabilizing oxides in addition to magnesium oxide and/or a gram-equivalent amount of calcium oxide, further contains yttrium oxide in an amount calculated to correspond to 2.9 to 3.6 weight % of magnesium oxide, 40 to 70% of the added amount of stabilizing oxides calculated as magnesium oxide being replaced by a gram-equivalent amount of yttrium oxide, the sintered moulded body furthermore having at room

EP 0 200 954 B1

temperature a portion of the monoclinic phase of < 1 volume % and after being subjected to a temperature of 1400 °C for 150 h a monoclinic phase portion < 10 volume % and a bending strength > 400 MPa.

10. A process for the manufacture of a sintered moulded body according to one of claims 1 to 9, characterized in that zirconium oxide and a mixture of stabilizing oxides which corresponds to a calculated added amount of 2.5 to 4.5 weight % of magnesium oxide, based on the total composition of the partially stabilized zirconium oxide, the mixture of the stabilizing oxides also comprising yttrium oxide in addition to magnesium oxide and/or a gram-equivalent amount of calcium oxide, and 10 to 70% of the added amount of stabilizing oxides calculated as magnesium oxide being replaced by gram-equivalent amounts of yttrium oxide or by such a mixture which additionally contains spinel ($MgAl_2O_4$), are wet-ground with the addition of a dispersing agent and after spray-drying a body is pressed from the powder mixture and is heated to a temperature of at least 1600 °C to produce the cubic phase and, after a dwell time of at least 0.5 h, is tempered to produce tetragonal precipitates in the matrix grains present in the cubic phase in the cubic/tetragonal 2-phase region as the sintered moulded body is being cooled to room temperature at a cooling rate of 250 °C/h to 400 °C/h.

11. A process for the manufacture of a sintered moulded body according to one of claims 1 to 9, characterized in that zirconium oxide and a mixture of stabilizing oxides which corresponds to a calculated added amount of 2.5 to 4.5 weight % of magnesium oxide, based on the total composition of the partially stabilized zirconium oxide, the mixture of the stabilizing oxides also comprising yttrium oxide in addition to magnesium oxide and/or a gram-equivalent amount of calcium oxide, and 10 to 70% of the added amount of stabilizing oxides calculated as magnesium oxide being replaced by gram-equivalent amounts of yttrium oxide or by such a mixture which additionally contains spinel ($MgAl_2O_4$), are wet-ground with the addition of a dispersing agent and after spray-drying a body is pressed from the powder mixture and is heated to a temperature of at least 1600 °C to produce the cubic phase and, after a dwell time of at least 0.5 h, is cooled to less than 1000 °C at a cooling rate of more than 1000 °C/h to produce tetragonal precipitates in the matrix grains present in the cubic phase, whereupon the sintered moulded body is subsequently tempered for a period of 0.5 to 2 h at a temperature in the range from 1350 °C to 1450 °C and subsequently cooled to room temperature.

12. Use of the sintered moulded body according to one of claims 1 to 9 for a component that is continuously subjected to temperatures of more than 900 °C.

**Revendications**

1. Corps façonné fritté, constitué d'oxyde de zirconium partiellement stabilisé, dans lequel :
   a) l'oxyde de zirconium est stabilisé au moyen d'un mélange d'oxydes qui, si on fait le calcul, correspond à une quantité ajoutée équivalente de 2,9 à 3,6 % en poids d'oxyde de magnésium, par rapport à la composition totale d'oxyde de zirconium partiellement stabilisé, le mélange des oxydes stabilisants est constitué d'oxyde d'yttrium, en plus de l'oxyde de magnésium et/ou d'une, quantité équivalente en grammes d'oxyde de calcium et la quantité ajoutée, calculée par rapport à l'oxyde de magnésium, d'oxydes stabilisants est remplacée, jusqu'à 20-50 %, par une quantité équivalente en grammes d'oxyde d'yttrium, les oxydes stabilisants étant répartis de façon homogène dans l'oxyde de zirconium,
   b) l'oxyde de zirconium est constitué de grains d'oxyde de zirconium se présentant dans la phase cubique et possédant une taille moyenne de 5 à 100 $\mu$m , et dans lesquels les portions de phases tétragonale et monoclinique se présentent sous forme de précipités,
   c) les portions de phases de l'oxyde de zirconium partiellement stabilisé se répartissent comme suit :

| | |
|---|---|
| variété cubique : | de 40 % en volume jusqu'à moins de 50 % en volume, |
| variété tétragonale : | de plus de 45 % en volume jusqu'à 60 % en volume, |
| variété monoclinique : | moins de 5 % en volume, le total des proportions des différentes variétés étant de 100 % en volume, et ces proportions étant mesurées à la température ambiante à la surface du corps façonné fritté, poli jusqu'à présenter l'éclat d'un miroir. |

2. Corps façonné fritté selon la revendication 1, caractérisé en ce que l'oxyde de zirconium partiellement

20

stabilisé possède une taille moyenne de grains de 5 à 70 $\mu$m.

3. Corps façonné fritté selon l'une des revendications 1 et 2, caractérisé en ce que le corps façonné fritté présente, après un traitement thermique de 1000 h à 1000 °C, une résistance à la rupture en flexion $\sigma_B$ supérieure à 400 MPa.

4. Corps façonné fritté, constitué d'oxyde de zirconium partiellement stabilisé, dans lequel :

a) l'oxyde de zirconium est stabilisé au moyen d'un mélange d'oxydes qui, si on fait le calcul, correspond à une quantité ajoutée équivalente de 2,9 à 3,6 % en poids d'oxyde de magnésium, par rapport à la composition totale d'oxyde de zirconium partiellement stabilisé, le mélange des oxydes stabilisants est constitué d'oxyde d'yttrium, en plus de l'oxyde de magnésium et/ou d'une quantité équivalente en grammes d'oxyde de calcium et la quantité ajoutée, calculée par rapport à l'oxyde de magnésium, d'oxydes stabilisants est remplacée, jusqu'à 40-70 %, par une quantité équivalente en grammes d'oxyde d'yttrium, les oxydes stabilisants étant répartis de façon homogène dans l'oxyde de zirconium,

b) l'oxyde de zirconium est constitué de grains d'oxyde de zirconium se présentant dans la phase cubique et possédant une taille moyenne de 5 à 100 $\mu$m , et dans lesquels les portions de phases tétragonale et monoclinique se présentent sous forme de précipités,

c) les portions de phases de l'oxyde de zirconium partiellement stabilisé se répartissent comme suit :

| | |
|---|---|
| variété cubique : | de 40 % en volume jusqu'à moins de 50 % en volume, |
| variété tétragonale : | de plus de 45 % en volume jusqu'à 60 % en volume, |
| variété monoclinique : | moins de 1 % en volume, le total des proportions des différentes variétés étant de 100 % en volume, et ces proportions étant mesurées à la température ambiante à la surface du corps façonné fritté, poli jusqu'à présenter l'éclat d'un miroir. |

d) le corps façonné fritté possède, après un traitement thermique de 150 h à 1400 °C, une proportion de phase monoclinique inférieure à 10 % en volume et une résistance à la rupture en flexion supérieure à 400 MPa.

5. Corps façonné fritté, constitué d'oxyde de zirconium partiellement stabilisé et de 5 à 20 % en poids de spinelle ($MgAl_2O_4$), dans lequel :

a) l'oxyde de zirconium est stabilisé au moyen d'un mélange d'oxydes qui, si on fait le calcul, correspond à une quantité ajoutée équivalente de 2,5 à 4,5 % en poids d'oxyde de magnésium, par rapport à la composition totale d'oxyde de zirconium partiellement stabilisé, le mélange des oxydes stabilisants est constitué d'oxyde d'yttrium, en plus de l'oxyde de magnésium et/ou d'une quantité équivalente en grammes d'oxyde de calcium et la quantité ajoutée, calculée par rapport à l'oxyde de magnésium, d'oxydes stabilisants est remplacée, jusqu'à 10-70 %, par une quantité équivalente en grammes d'oxyde d'yttrium, les oxydes stabilisants étant répartis de façon homogène dans l'oxyde de zirconium,

b) l'oxyde de zirconium est constitué de grains d'oxyde de zirconium se présentant dans la phase cubique et possédant une taille moyenne de 5 à 100 $\mu$m, et dans lesquels les portions de phases tétragonale et monoclinique se présentent sous forme de précipités,

c) les portions de phases de l'oxyde de zirconium partiellement stabilisé se répartissent comme suit :

| | |
|---|---|
| variété cubique : | de 40 % en volume jusqu'à 70 % en volume, |
| variété tétragonale : | de 30 % en volume jusqu'à 60 % en volume, |
| variété monoclinique : | jusqu'à 10 % en volume, le total des proportions des différentes variétés étant de 100 % en volume, et ces proportions étant mesurées à la température ambiante à la surface du corps façonné fritté, poli jusqu'à présenter l'éclat d'un miroir. |

6. Procédé de fabrication d'un corps façonné fritté conforme à l'une des revendications 1 à 3 ou 4, caractérisé en ce que le mélange contenant l'oxyde de zirconium et le mélange d'oxydes stabilisants, auquel est ajouté un agent dispersant, est broyé au mouillé et, après séchage par projection, le mélange pulvérulent est comprimé en un corps qui est chauffé à une température suffisante pour l'obtention de la phase cubique, d'au moins 1600 °C, et après un temps de maintien d'au moins 0,5 h, subit un tempérage dans le domaine de coexistence des deux phases cubique et tétragonale, pour l'obtention de précipités tétragonaux dans les grains de matrice se présentant dans la phase cubique, tandis que le corps façonné fritté est refroidi jusqu'à la température ambiante avec une vitesse de refroidissement de 250° C/h à 400° C/h.

7. Procédé de fabrication d'un corps façonné fritté conforme à l'une des revendications 1 à 3 ou 4, caractérisé en ce que le mélange contenant l'oxyde de zirconium et le mélange d'oxydes stabilisants, auquel est ajouté un agent dispersant, est broyé au mouillé et, après séchage par projection, le mélange pulvérulent est comprimé en un corps qui est chauffé à une température suffisante pour l'obtention de la phase cubique, d'au moins 1600° C, et en ce que le corps façonné fritté, après un temps de maintien d'au moins 0,5 h, est refroidi jusqu'à une température inférieure a 1000° C à une vitesse de refroidissement supérieure à 1000° C/h, après quoi le corps façonné fritté subit, pendant une durée de 0,5 à 2 h, un tempérage à une température située dans l'intervalle de 1350° C à 1450° C, puis il est refroidi jusqu'à la température ambiante.

8. Procédé de fabrication d'un corps façonné fritté conforme à la revendication 5, caractérisé en ce qu'un mélange constitué d'oxyde de zirconium auquel on a ajouté de 5 à 20 % en poids de spinelle ($MgAl_2O_4$), ainsi que des oxydes stabilisants et un agent de dispersion, est broyé au mouillé et, après séchage par projection, le mélange pulvérulent est comprimé en un corps qui, est chauffé à une température suffisante pour l'obtention de la phase cubique, d'au moins 1600° C, et qui, après un temps de maintien d'au moins 0,5 h, subit un tempérage dans le domaine de coexistence des deux phases cubique et tétragonale, pour l'obtention de précipités tétragonaux dans les grains de matrice se présentant dans la phase cubique, tandis que le corps façonné fritté est refroidi jusqu'à la température ambiante à une vitesse de refroidissement de 250° C/h à 400° C/h.

9. Procédé de fabrication d'un corps façonné fritté conforme à la revendication 5, caractérisé en ce qu'un mélange constitué d'oxyde de zirconium auquel on a ajouté de 5 à 20 % en poids de spinelle ($MgAl_2O_4$), ainsi que des oxydes stabilisants et un agent de dispersion, est broyé au mouillé et, après séchage par projection, le mélange pulvérulent est comprimé en un corps qui est chauffé à une température suffisante pour l'obtention de la phase cubique, d'au moins 1600° C, et qui, après un temps de maintien d'au moins 0,5 h, est refroidi jusqu'à une température inférieure à 1000° C, avec une vitesse de refroidissement supérieure à 1000° C/h, après quoi le corps façonné fritté subit un tempérage à une température située dans l'intervalle de 1350° C à 1450° C, pendant une durée de 0,5 à 2 h, puis il est refroidi jusqu'à la température ambiante.

10. Utilisation du corps façonné fritté conforme à l'une des revendications 1 à 5, pour une pièce exposée en continu à des températures supérieures à 900° C.

**Revendication pour l'état contractant suivants : IT**

1. Corps façonné fritté, constitué d'oxyde de zirconium partiellement stabilisé en tant que composant unique, ou qui contient de l'oxyde de zirconium partiellement stabilisé, en tant que composant prépondérant, en mélange avec du spinelle ($MgAl_2O_4$), dans lequel :

   a) l'oxyde de zirconium est stabilisé au moyen d'un mélange d'oxydes qui, si on fait le calcul, correspond à une quantité ajoutée équivalente de 2,5 à 4,5 % en poids d'oxyde de magnésium, par rapport à la composition totale d'oxyde de zirconium partiellement stabilisé, le mélange des oxydes stabilisants est constitué d'oxyde d'yttrium, en plus de l'oxyde de magnésium et/ou d'une quantité équivalente en grammes d'oxyde de calcium et la quantité ajoutée, calculée par rapport à l'oxyde de magnésium, d'oxydes stabilisants est remplacée, jusqu'à 10-70 %, par une quantité équivalente en grammes d'oxyde d'yttrium, les oxydes stabilisants étant répartis de façon homogène dans l'oxyde de zirconium,

   b) l'oxyde de zirconium est constitué de grains d'oxyde de zirconium se présentant dans la phase cubique et possédant une taille moyenne de 5 à 100 $\mu$m, et dans lesquels les portions de phases tétragonale et monoclinique se présentent sous forme de précipités,

   c) les portions de phases de l'oxyde de zirconium partiellement stabilisé se répartissent comme suit :

   | | |
   |---|---|
   | variété cubique : | de 40 % en volume jusqu'à 70 % en volume, |
   | variété tétragonale : | de 30 % en volume jusqu'à 60 % en volume, |
   | variété monoclinique : | jusqu'à 10 % en volume, le total des proportions des différentes |

variétés étant de 100 % en volume, et ces proportions étant mesurées à la température ambiante à la surfaoe du corps façonné fritté, poli jusqu'à présenter l'éclat d'un miroir.

2. Corps façonné fritté selon la revendication 1, caractérisé en ce qu'il contient, en plus de l'oxyde de zirconium partiellement stabilisé, du spinelle ($MgAl_2O_4$) en une quantité de 5 à 20 % en poids.

3. Corps façonné fritté selon l'une des revendications 1 et 2, caractérisé en ce que l'oxyde de zirconium partiellement stabilisé présente une taille moyenne de grains de 5 à 70 $\mu$m.

4. Corps façonné fritté selon l'une des revendications 1 à 3, caractérisé en ce que l'oxyde de zirconium partiellement stabilisé contient un mélange d'oxydes stabilisants qui correspond, si on fait le calcul, à une quantité équivalente de 2,6 à 4,0 % en poids d'oxyde de magnésium.

5. Corps façonné fritté selon l'une des revendications 1 à 4, caractérisé en ce que l'oxyde de zirconium partiellement stabilisé contient un mélange d'oxydes stabilisants qui correspond, si on fait le calcul, à une quantité équivalente de 2,9 à 3,6 % en poids d'oxyde de magnésium.

6. Corps façonné fritté selon l'une des revendications 1 à 5, caractérisé en ce que l'oxyde de magnésium est remplacé, jusqu'à 20-50 %, par une quantité équivalente en grammes d'$Y_2O_3$.

7. Corps façonné fritté selon l'une des revendications 1 à 6, caractérisé en ce que la proportion de variété monoclinique est inférieure à 5 % en volume, par rapport à la phase cristalline totale d'oxyde de zirconium partiellement stabilisé.

8. Corps façonné fritté selon l'une des revendications 1 à 7, caractérisé en ce que le corps façonné fritté présente, après un traitement thermique de 1000 h à 1000°C, une résistance à la rupture en flexion $\sigma_B$ supérieure à 400 MPa.

9. Corps façonné fritté selon l'une des revendications 1 à 8, caractérisé en ce que le corps façonné fritté est constitué d'un oxyde de zirconium partiellement stabilisé, qui contient, en tant que mélange d'oxydes stabilisants, outre de l'oxyde de magnésium et/ou une quantité équivalente en grammes d'oxyde de calcium, de l'oxyde d'yttrium en une quantité correspondant, si on fait le calcul, à 2,5-3,6 % en poids d'oxyde de magnésium, la quantité ajoutée d'oxydes stabilisants, calculée par rapport à l'oxyde de magnésium, étant remplacée jusqu'à 40-70 % par une quantité équivalente en grammes d'oxyde d'yttrium, et en outre, le corps façonné fritté présentant, à la température ambiante, une proportion de phase monoclinique inférieure à 1 % en volume et, après un traitement thermique de 150 h à 1400°C, une proportion de phase monoclinique inférieure à 10 % en volume et une résistance à la rupture en flexion supérieure à 400 MPa.

10. Procédé de fabrication d'un corps façonné fritté conforme à l'une des revendications 1 à 9, caractérisé en ce que l'oxyde de zirconium et un mélange d'oxydes stabilisants, qui correspond, si on fait le calcul, à une quantité ajoutée équivalente de 2,5 à 4,5 % en poids d'oxyde de magnésium, par rapport à la composition totale d'oxyde de zirconium partiellement stabilisé, le mélange d'oxydes stabilisants comportant de l'oxyde d'yttrium, en plus de l'oxyde de magnésium et/ou d'une quantité équivalente en grammes d'oxyde de calcium, et la quantité ajoutée d'oxydes stabilisants, calculée par rapport à l'oxyde de magnésium, étant remplacée, jusqu'à 10-70 %, par une quantité équivalente en grammes d'oxyde d'yttrium, ou un tel mélange, qui contient en plus du spinelle ($MgAl_2O_4$), est broyé au mouillé après addition d'un agent dispersant, et après séchage par projection, le mélange pulvérulent est comprimé en un corps qui est chauffé à une température suffisante pour l'obtention de la phase cubique, d'au moins 1600°C, et après un temps de maintien d'au moins 0,5 h, subit un tempérage dans le domaine de coexistence des deux phases cubique et tétragonale pour l'obtention de précipités tétragonaux dans les grains de matrice présents dans la phase cubique, tandis que le corps façonné fritté est refroidi jusqu'à la température ambiante avec une vitesse de refroidissement de 250°C/h à 400°C/h.

11. Procédé de fabrication d'un corps façonné fritté conforme à l'une des revendications 1 à 9, caractérisé en ce que l'oxyde de zirconium et un mélange d'oxydes stabilisants, qui correspond, si on fait le calcul, à une quantité ajoutée équivalente de 2,5 à 4,5 % en poids d'oxyde de magnésium, par rapport à la composition totale d'oxyde de zirconium partiellement stabilisé, le mélange d'oxydes stabilisants comportant de l'oxyde d'yttrium, en plus de l'oxyde de magnésium et/ou d'une quantité équivalente en grammes d'oxyde de calcium, et la quantité ajoutée d'oxydes stabilisants, calculée par rapport à l'oxyde de magnésium, étant remplacée, jusqu'à 10-70 %, par une quantité équivalente en grammes d'oxyde d'yttrium, ou un tel mélange, qui contient en plus du spinelle ($MgAl_2O_4$), est broyé au mouillé après addition d'un agent dispersant, et après séchage par projection, le mélange pulvérulent est comprimé en un corps qui est chauffé à une température suffisante pour l'obtention de la phase cubique, d'au moins 1600°C, et après un temps de maintien d'au moins 0,5 h, est refroidi jusqu'à une température inférieure à 1000°C avec une vitesse de refroidissement supérieure à 1000°C/h, pour l'obtention de précipités tétragonaux dans les grains de matrice présents dans la phase cubique, après quoi le corps façonné fritté subit un tempérage à une température située dans l'intervalle de 1350°C à 1450°C pendant de 0,5 à 2 h, puis il est refroidi jusqu'à la température ambiante.

12. Utilisation du corps façonné fritté selon l'une des revendications 1 à 9, pour une pièce soumise en continu à des températures supérieures à 900°C.